Europäisches Patentamt

European Patent Office

Office européen des brevets

(19)

(11) **EP 0 693 218 B1**

(12) **FASCICULE DE BREVET EUROPEEN**

(45) Date de publication et mention
de la délivrance du brevet:
**23.04.1997 Bulletin 1997/17**

(21) Numéro de dépôt: **95907708.2**

(22) Date de dépôt: **26.01.1995**

(51) Int Cl.6: **H01G 2/08**

(86) Numéro de dépôt international:
**PCT/FR95/00091**

**WO 95/22155 (17.08.1995 Gazette 1995/35)**

(54) **DISPOSITIF D'ASSEMBLAGE DE CONDENSATEURS DE PUISSANCE**

ZUSAMMENBAUVORRICHTUNG FUER LEITUNGSCONDENSATOREN

DEVICE FOR ASSEMBLING POWER CAPACITORS

(84) Etats contractants désignés:
**BE DE ES GB IT SE**

(30) Priorité: **09.02.1994 FR 9401555**

(43) Date de publication de la demande:
**24.01.1996 Bulletin 1996/04**

(73) Titulaire: **Jakoubovitch, Albert**
**F-34320 Roujan (FR)**

(72) Inventeur: **Jakoubovitch, Albert**
**F-34320 Roujan (FR)**

(56) Documents cités:
**WO-A-93/17439**          **DE-U- 8 802 745**

• **DATABASE WPI Week 7651, Derwent
Publications Ltd., London, GB; AN 76-M0905X; &
SU-A-502 381**

## Description

L'apparition de transistors et de thyristors de puissance a conduit à une évolution des générateurs destinés au chauffage par induction.

Les tensions d'alimentation de ces moyens de commutation sont généralement inférieures à 1000 V.

Il en résulte que les tensions délivrées par les générateurs de chauffage par induction utilisant soit des transistors, soit des thyristors se situent en dessous de 1000 x $\sqrt{2}$, c'est à dire 700 V environ et, dans la pratique, la majorité de ces sources de puissance fournissent des tensions comprises entre 250 et 700 V.

L'obligation d'utiliser un inducteur, c'est à dire une réactance pour transmettre la puissance du générateur à la charge à chauffer, implique la création d'une puissance réactive dont la valeur est habituellement de 8 à 40 fois celle de la puissance active.

Il est par conséquent nécessaire de disposer de batteries de condensateurs associées à l'inducteur, batteries dont les caractéristiques permettent la fourniture de courant importants à une tension inférieures à 700 V.

Les fréquences de fonctionnement de ces dispositifs sont habituellement comprises entre 40 et 400 kHz.

WO-A-9317439 révèle un dispositif d'assemblage de condensateurs de puissance caractérisé par l'utilisation de deux électrodes massive en métal conducteur de l'électricité et de la chaleur et percées d'alvéoles dans lesquelles sont logés les condensateurs élémentaires et conçus pour être refroidis par conduction.

L'un des moyens classique de constituer de telles batteries consiste à assembler en parallèle des condensateurs d'une capacitance aussi élevée que possible et capables de fournir pour chacun d'entre eux des courants de l'ordre de quelques dizaines à quelques centaines d'ampères.

L'assemblage d'un grand nombre d'élément pose plusieurs problèmes techniques :

- La création de champs magnétiques importants produits par chacun des condensateurs de la batterie est susceptible d'entraîner le chauffage par induction des condensateurs situés à proximité des bornes de sortie de la batterie.
- L'utilisation de condensateurs de capacitances importantes peut amener des possibilités de résonances entre deux ou plusieurs condensateurs de la batterie. Un tel phénomène a pour effet, lorsqu'il se manifeste, d'amener la destruction d'éléments de la batterie.
- Les condensateurs de la batterie sont habituellement disposés entre deux plaques de cuivre refroidies par circulation d'eau, ce qui entraîne l'obligation du démontage de tout ou une grande partie de la batterie, s'il est nécessaire de changer un condensateur.

La mise en parallèle d'un grand nombre de condensateurs a pour conséquence de produire un courant important qu'il faut amener aux bornes de sortie de la batterie par l'intermédiaire de connections conçues pour entraîner une chute de tension ohmique et inductive négligeable.

Ces conditions sont difficiles à réaliser.

Le dispositif objet de la présente invention est défini dans la revendication 1 et permet de résoudre l'ensemble de ces problèmes.

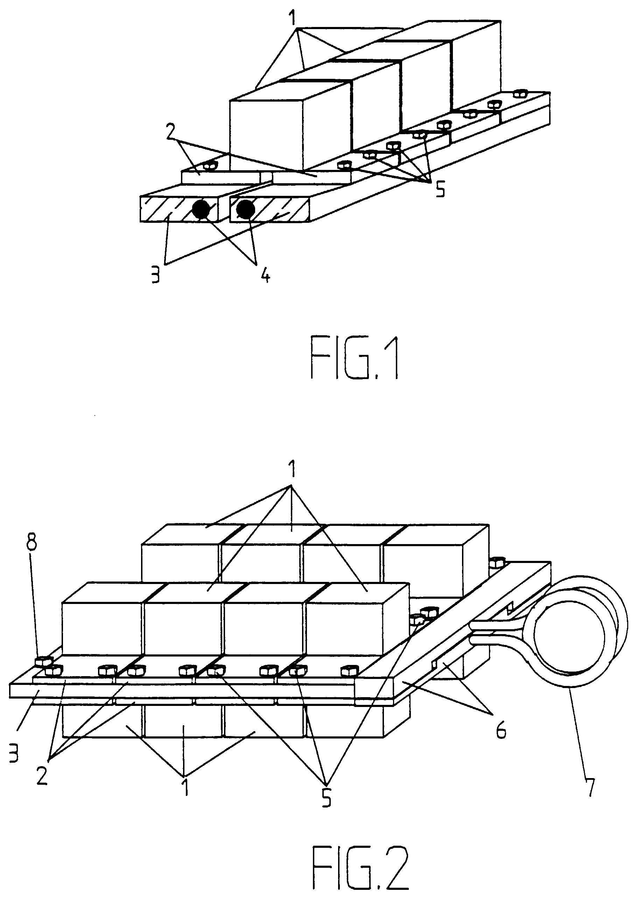

Il sera décrit en se référant, à titre d'exemple non limitatif, à la figure 1 représentant le dispositif selon l'invention, et la figure 2, une variante de ce dispositif.

Il est essentiellement constitué de deux ou plusieurs barres (3) réalisées en métal conducteur de l'électricité et de la chaleur, refroidies par des canaux (4) parcourus par de l'eau (4).

Les condensateurs sont disposés à cheval sur deux barres (3) à l'aide de vis de fixation (5).

Les condensateurs (1) peuvent être disposés en nombre quelconque ,soit sur un côté seulement selon la figure 1 soit, selon la figure 2, de part et d'autre des barres de refroidissement (3).

La distance entre les barres collectrices refroidies par circulation d'eau est réduite à un intervalle de l'ordre de 1 à 5 mm de façon à confiner entre les barres le champs magnétique créé par le passage des courants issus de chaque condensateurs.

Le champs magnétique créé par la circulation de courants importants entre les barres collectrices (3) devient peu gênant dès que la distance entre l'espace où le champs magnétique et le lieu où se situe la pièce métallique la plus proche dépasse l'intervalle entre les deux barres.

Il est ainsi possible de réaliser des ensembles dont la puissance réactive dépasse 1000 kVAR 20 dans des volumes de l'ordre de 3 décimètres cube.

Les extrémités des barres peuvent avantageusement être reliées d'un côté de la batterie aux bornes (6) de l'inducteur (7) et de l'autre, être équipées de bornes (8) destinées au générateur.

## Revendications

1. Dispositif d'assemblage de condensateurs de puissance (1) refroidis par conduction, le dispositif comportant au moins deux barres collectrices (3) refroidies par circulation d'eau disposées à faible distance l'une de l'autre, chacune des bornes (2) des condensateurs (1) réunis en batterie étant raccordée électriquement et thermiquement par vissage (5) aux dites barres.

2. Dispositif selon la revendication 1 caractérisé par la disposition de condensateurs (1) sur chacune des faces des barres collectrices (3).

3. Dispositif selon la revendication 1 ou 2 caractérisé par le raccordement des dites barres aux bornes (6) destinées à recevoir l'inducteur (7) à l'une des extrémités de la batterie et aux bornes de raccordement (8) du générateur à l'autre extrémité.

## Patentansprüche

1. Einrichtung für den Zusammenbau von konduktionsgekühlten Leistungskondensatoren (1), dadurch gekennzeichnet, daß die genannte Einrichtung aus mindestens zwei Sammelschienen (3) besteht, die durch Wasserumlauf gekühlt und mit einem kleinen Abstand zwischeneinander angeordnet sind, wobei die jeweiligen Anschlüsse (2) der batteriegeschalteten Kondensatoren (1) elektrisch und thermisch durch Aufschrauben (5) an die genannten Sammelschienen verbunden werden.

2. Einrichtung gemäß Anspruch 1, dadurch gekennzeichnet, daß die Kondensatoren (1) auf beiden Seiten der Sammelschienen (3) angeordnet sind.

3. Einrichtung gemäß Anspruch 1 oder 2, dadurch gekennzeichnet, daß die genannten Sammelschienen an einem Ende der Batterie mit Anschlüssen (6), die für den Anschluß des Induktors (7) bestimmt sind, und am anderen Ende mit den Verbindugsanschlüssen (8) des Generators verbunden sind.

## Claims

1. An assembly device for power capacitors (1) cooled by conduction, wherein said device comprises at least two bus bars (3) cooled by water circulation and arranged at a short distance from one another, each of the terminals (2) of the capacitors (1) mounted into a bank being electrically and thermally connected by screwing (5) onto said bus bars.

2. A device according to claim 1, characterized in that the capacitors (1) are arranged on each side of the bus bars (3).

3. A device according to claim 1 or 2, characterized in that said bus bars are connected to the terminals (6) provided for receiving the inductor (7) at one end of the bank and to the connecting terminals (8) of the generator at the other end.

FIG.1

FIG.2